# EUROPEAN PATENT SPECIFICATION

(11) **EP 3 422 507 B1**
(45) Date of publication and mention of the grant of the patent: **06.10.2021**
(21) Application number: 18180228.1
(22) Date of filing: 27.06.2018
(51) Int. Cl.: H02G 3/04

(54) **METHOD OF MANUFACTURING A MESH CABLE TRAY**
VERFAHREN ZUR HERSTELLUNG EINER NETZKABELRINNE
PROCÉDÉ DE FABRICATION D'UN CHEMIN DE CÂBLES EN RÉSEAU

(30) Priority: 29.06.2017 ES 201730863
(43) Date of publication of application: 02.01.2019
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- EP-A2- 0 403 440
- WO-A1-2015/144228
- DE-A1-102012 108 297
- DE-T2- 60 100 008
- DE-U1- 20 009 805
- US-A- 3 363 050
- US-A1- 2001 017 214

## Description

### Field of the Invention

The invention relates to a method of manufacturing a mesh cable tray.

The mesh cable trays referred to in the invention have a U-shaped cross-section, with a bottom wall and two side walls, and are made up of a plurality of transverse rods and a plurality of longitudinal rods, said transverse rods and longitudinal rods intersecting with one another forming a mesh and being joined to one another.

### State of the Art

Mesh cable trays are particularly suitable for carrying electric cables that must be well ventilated as a result of air being able to pass freely through the bottom and side walls of the mesh cable tray. They are also suitable for carrying all types of cables (power cords or data cables, optical fiber cables, etc.) in installations in which it is desired for the cables to be visible and readily accessible. Another advantage of mesh cable trays is that they have a good mechanical strength without having an excessive weight.

In the known mesh cable trays, the transverse rods and the longitudinal rods forming a mesh are metal rods with a circular cross-section which intersect with one another on overlapping planes and are welded together at the intersecting points as shown, for example, in documents ES2279589T3 and ES2289249T3. A problem of these mesh cable trays is that the intersections between the rods form hard-to-clean nooks and crevices in which dirt accumulates. One of the implications of this problem is that the known mesh cable trays are rather unsuitable for installations with strict hygiene requirements, such as in the food industry, for example. Another drawback of these mesh cable trays is that cables having a small diameter may get caught in the intersections between the rods.

Document WO2015144228A1 discloses a method of manufacturing a mesh cable tray from a flat metal sheet, the method comprising first steps of punching and forming operations, in which through holes are produced in the flat metal sheet so that the remaining material constitutes transverse rods and longitudinal rods of the mesh cable tray being formed, and a final step of bending the flat metal sheet along two bending lines parallel to the longitudinal direction so that the U-shape of the mesh cable tray is formed.

### Description of the Invention

The purpose of the invention is to provide a mesh cable tray of the type indicated above, offering the aforementioned advantages characteristic of a mesh configuration, as well as improved hygiene conditions, and allowing an easier placement of the cables that must run along the cable tray.

The present invention is defined by the accompanying independent claim 1.

This method according to the invention provides a mesh cable tray formed by a single part made of a polymeric material, in which the transverse rods and the longitudinal rods form intersections on a single plane. As a result thereof, the cables are supported on the rods on one and the same plane, so it is easier to move the cables in the cable tray without the risk of said cables getting caught on the transverse rods and the longitudinal rods. On the other hand, as the rods do not intersect with one another on overlapping planes, less dirt will accumulate in the intersections and these intersections will furthermore be easier to clean.

The method according to the invention comprises the following steps:
- forming in said injection mold a first segment of said mesh cable tray;
- opening said injection mold, demolding said first segment, and moving said first segment to a new position in the longitudinal direction of said mesh cable tray, such that in said new position said first segment is arranged outside said injection mold except for one end of said first segment which is arranged inside the cavity of said injection mold; closing said injection mold and molding a second segment of said mesh cable tray which is made integral, by molding, with said first segment in the prolongation thereof in said longitudinal direction;
- optionally repeating the preceding step to form successive segments of said mesh cable tray until obtaining a desired length thereof.

This method of molding successive segments allows making cable trays of a great length without having to use an injection mold with a corresponding length which would have a high cost.

In advantageous embodiments, the injection mold used in the method according to the invention is shaped such that said transverse rods and longitudinal rods of the mesh cable tray formed in said injection mold have a rectangular-shaped, preferably a square-shaped, cross-section, with four planar faces and corners without any sharp edge. These planar faces of the rods form a stable sitting surface for cables and accessories. In particular, at the bottom of the mesh cable tray, all these planar faces of the rods form a discontinuous planar surface making it easier to support the cables on said bottom and also to place the various accessories on said bottom, such as accessories for holding the cables, for example. The fact that the corners of the rods have no sharp edge reduces the risk of the cables getting damaged as they brush against said corners. The corners preferably have a round shape. They can also have a beveled shape.

In other advantageous embodiments, the injection mold used in the method according to the invention is shaped such that said transverse rods and longitudinal rods of the mesh cable tray formed in said injection mold have a circular-shaped cross-section. The circular-shaped cross-section minimizes the outer surface of the rods, and therefore minimizes the total surface of the mesh cable tray on which dirt can accumulate. This is an advantage for installations with strict hygiene requirements, such as in the food industry, for example. It will be seen that, even though the rods have a circular-shaped cross-section like in the known mesh cable trays, they differ from these known mesh cable trays in an essential feature of the invention which consists of the rods not intersecting with one another on overlapping planes, but rather are coplanar in the intersections thereof with one another. As explained above, less dirt will thus accumulate in the intersections and these intersections will furthermore be easier to clean.

The injection mold used in the method according to the invention is preferably formed such that the mesh cable tray formed in said injection mold has at the free ends of its side walls an outward flange formed by one of said longitudinal rods. This configuration of the mesh cable tray makes it easier to place a lid which can be snap-fitted onto the flange.

The polymeric material injected into said injection mold to form said mesh cable tray as a single part is preferably a thermoplastic, such as PVC, polycarbonate, or polypropylene. It can also be a thermosetting resin such as glass-fiber reinforced polyester. The polymeric material is preferably an electrical insulating material, so the mesh cable tray itself provides a reliable electrical protection, making it unnecessary to ground the cable installation. The polymeric material is preferably an electrical insulating material with a surface resistivity greater than 100 MΩ (surface resistivity measured according to the EN 62631-3-2:2016 standard).

### Brief Description of the Drawings

The advantages and features of the invention will be understood from the following description in which preferred embodiments of the invention are described in reference to the drawings without limiting the scope of the main claim.
Figures 1 and 2 are, respectively, a top perspective view and a detail view of a mesh cable tray obtained by means of the method according to the invention, by molding in an injection mold. Figure 2 is an enlarged detail view of the area indicated by a dashed circle in Figure 1.
Figures 3 and 4 are similar to Figures 1 and 2 but from a bottom perspective view.
Figures 5 and 6 are enlarged sectional views of any of the longitudinal or transverse rods of the mesh cable tray, according to two embodiments in which the rods have a cross-section of different shapes.
Figure 7 is a front view of the mesh cable tray.
Figure 8 is a front view of the same mesh cable tray with a lid.
Figures 9, 10, and 11 show three successive steps of the method of manufacturing the mesh cable tray by molding in an injection mold.

### Detailed Description of Embodiments of the Invention

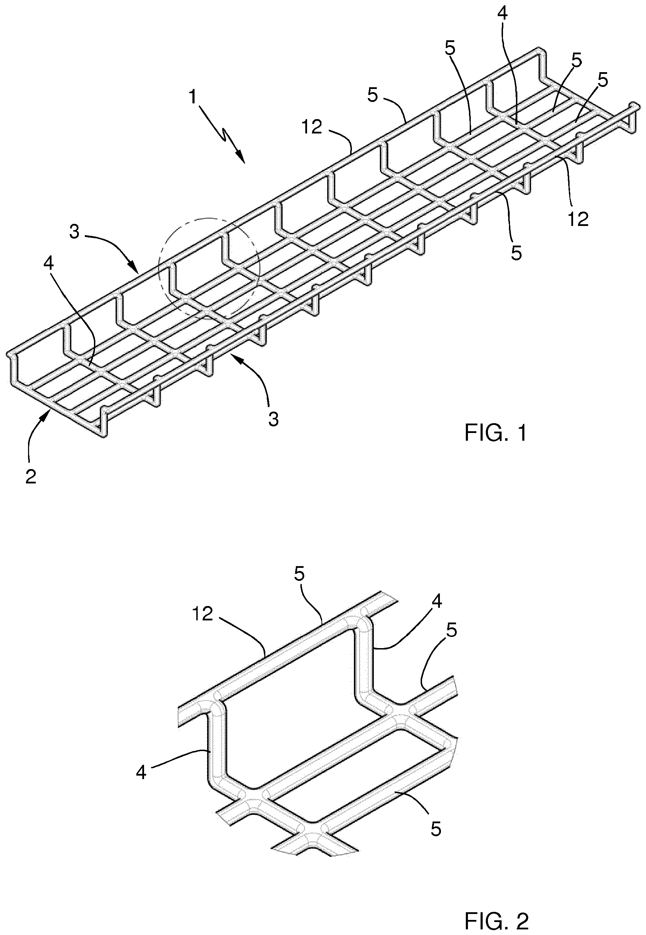

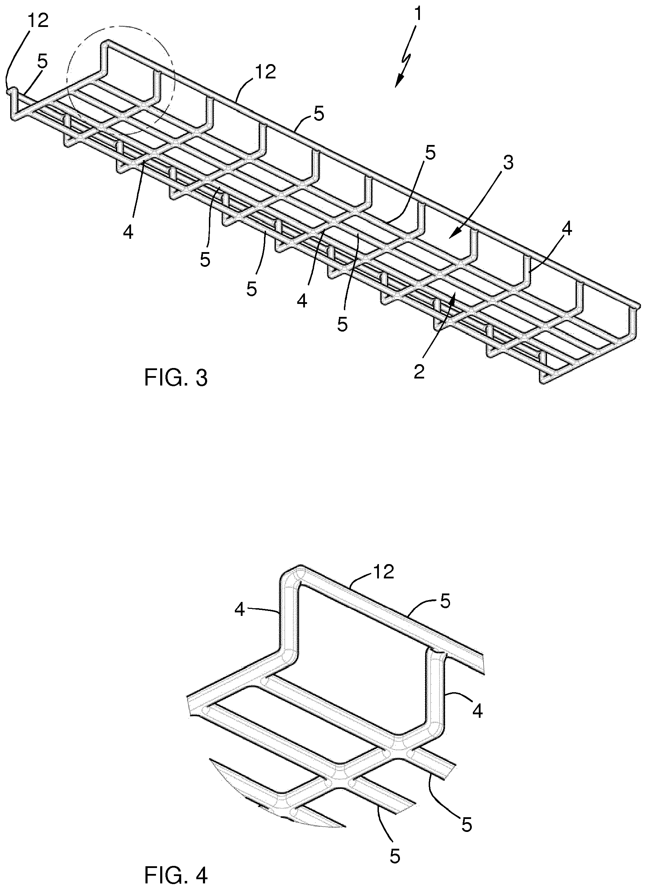

Figures 1 to 4 show a mesh cable tray 1 obtained by means of the method according to the invention, by molding in an injection mold.

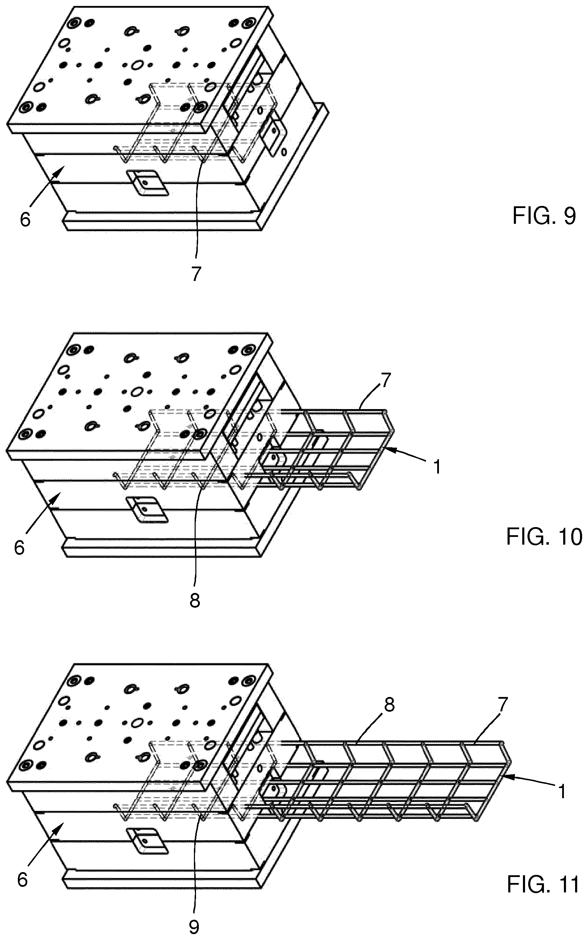

The cable tray 1 according to the invention has the same general structure as conventional mesh cable trays, i.e., having a U-shaped cross-section, with a bottom wall 2 and two side walls 3, and is made up of a plurality of transverse rods 4 and a plurality of longitudinal rods 5 which are joined to one another forming a mesh. However, unlike the known mesh cable trays, in the mesh cable tray 1 according to the invention the transverse rods 4 and the longitudinal rods 5 are not independent rods that intersect with one another on overlapping planes and welded together at the intersecting points, but rather form a single part and are coplanar in the intersections thereof with one another. This particular configuration is obtained by molding the mesh cable tray 1 as a single part made of a polymeric material in an injection mold 6, as can be seen in Figures 9 to 11, and as will be described below.

The polymeric material used for forming this mesh cable tray 1 by means of injection molding is preferably an electrical insulating material with a surface resistivity greater than 100 MΩ (measured according to the EN 62631-3-2:2016 standard). For example, the polymeric material is polyvinyl chloride (PVC).

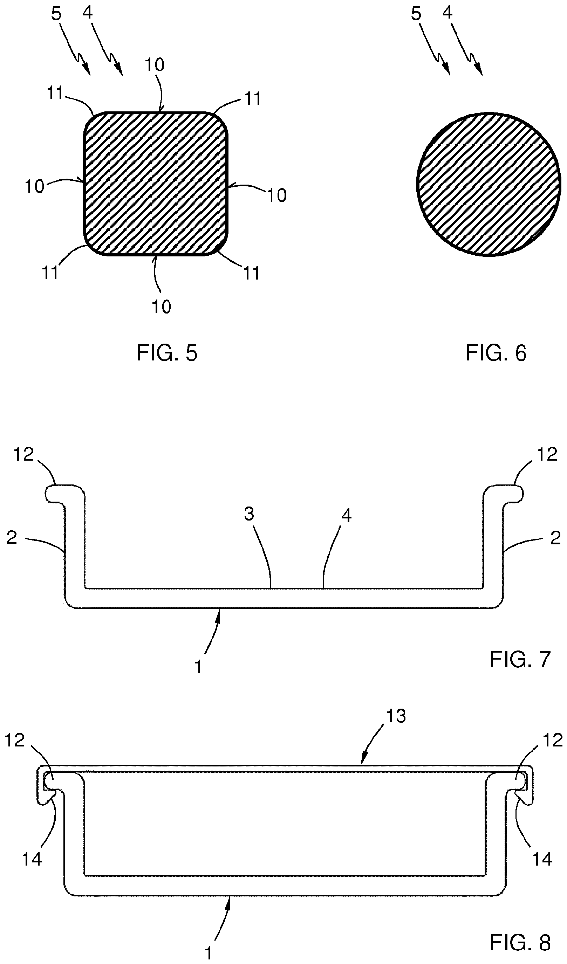

In an embodiment shown in Figure 5, the transverse rods 4 and the longitudinal rods 5 have a rectangular-shaped cross-section with four planar faces 10 and corners without any sharp edge, which are preferably rounded corners 11. The transverse rods 4 and the longitudinal rods 5 have a square-shaped cross-section with four identical planar faces 10 and rounded corners 11.

In another embodiment shown in Figure 6, the transverse rods 4 and the longitudinal rods 5 have a circular-shaped cross-section.

For any of these embodiments shown in Figures 5 and 6, the mesh cable tray 1 can advantageously have the geometry shown in Figures 1 to 4, in which the free ends of the side walls 3 have an outward flange 12 which is formed by one of the longitudinal rods 5.

As can be seen in the front view of Figure 7, in the cable tray 1 each of the side walls 2 and the bottom wall 3 is on one and the same plane, because the transverse rods 4 and the longitudinal rods 5 intersect with one another on one and the same plane without overlapping. This is a significant difference with respect to the known mesh cable trays, in which the transverse rods and the longitudinal rods forming a mesh are metal rods that intersect with one another on overlapping planes and welded together at the intersecting points.

The front view of Figure 8 shows a lid 13 snap-fitted onto the mesh cable tray 1. The lid 13 has on its lateral ends a tooth 14 that engages the flange 12 of the mesh cable tray 1. This engagement of the tooth 14 with the flange 12 allows fixing the lid 13 on the mesh cable tray 1 by pressure, in the same way that a lid is fixed to a continuous extruded cable tray. Advantageously, the lid 13 is the same as that used for a continuous extruded cable tray having the same front profile as the mesh cable tray 1. The flange 12 can have the shape shown in Figure 7 or another shape which corresponds to another continuous extruded cable tray and is therefore compatible with the lid used for said tray.

The mesh cable tray 1 formed as a single part made of a polymeric material is obtained by means of injection molding in an injection mold the molding cavity of which has a shape corresponding to the shape of said mesh cable tray 1.

To manufacture a mesh cable tray 1 of a great length without requiring an injection mold of the corresponding length, the method shown in Figures 9 to 11 is carried out, in which an injection mold 6 is used, the molding cavity of which only corresponds to a segment of the mesh cable tray 1 to be manufactured. The method is performed in successive molding steps in a single injection mold 6, such that a new segment of one and the same mesh cable tray 1 is formed in each step.
- In a first step (Figure 9), a first segment 7 of the mesh cable tray 1 is formed in said injection mold 6.
- In a successive step, the injection mold 6 is opened, the first segment 7 formed in the first step is demolded, and said first segment 7 is moved to a new position in the longitudinal direction of the mesh cable tray 1, such that in said new position said first segment 7 is arranged outside the injection mold 6, except for one end of said first segment 7 which is arranged inside the cavity of the injection mold 6. Next, the injection mold 6 is closed and a second segment 8 of the mesh cable tray 1 is molded therein (Figure 10). This second segment 8 is made integral, by molding, with the first segment 7 in the prolongation thereof in said longitudinal direction, because the polymeric material injected into the injection mold 6 solidifies and thereby binds to the end of said first segment 7 which is arranged in the cavity of the mold.
- Said successive step is repeated to form successive segments 9 of the mesh cable tray 1 (Figure 11) as many times as necessary to obtain the desired length thereof.

## Claims

1. A method of manufacturing a mesh cable tray (1) which has a U-shaped cross-section, with a bottom wall (2) and two side walls (3), and is made up of a plurality of transverse rods (4) and a plurality of longitudinal rods (5), said transverse rods (4) and longitudinal rods (5) intersecting with one another forming a mesh and being joined to one another, and said transverse rods (4) and longitudinal rods (5) being coplanar in the intersections thereof with one another, **characterized by** molding said mesh cable tray (1) as a single part made of a polymeric material, in an injection mold (6), said injection mold (6) being shaped such that the transverse rods (4) and the longitudinal rods (5) of the mesh cable tray (1) formed in said injection mold (6) are coplanar in the intersections thereof with one another; and in that it comprises the following steps:
- forming in said injection mold (6) a first segment (7) of said mesh cable tray (1);
- opening said injection mold (6), demolding said first segment (7), and moving said first segment (7) to a new position in the longitudinal direction of said mesh cable tray (1), such that in said new position said first segment (7) is arranged outside said injection mold (6) except for one end of said first segment (7) which is arranged inside the cavity of said injection mold (6); closing said injection mold (6) and molding a second segment (8) of said mesh cable tray (1) which is made integral, by molding, with said first segment (7) in the prolongation thereof in said longitudinal direction;
- optionally repeating the preceding step to form successive segments (9) of said mesh cable tray (1) until obtaining a desired length thereof.

2. The method of manufacturing a mesh cable tray (1) according to claim 1, **characterized by** using, for molding said mesh cable tray (1), said injection mold (6) shaped such that the transverse rods (4) and the longitudinal rods (5) of the mesh cable tray (1) formed in said injection mold (6) have a rectangular-shaped cross-section with four planar faces (10) and corners without any sharp edge (11).

3. The method of manufacturing a mesh cable tray (1) according to claim 1, **characterized by** using, for molding said mesh cable tray (1), said injection mold (6) shaped such that the transverse rods (4) and the longitudinal rods (5) of the mesh cable tray (1) formed in said injection mold (6) have a circular-shaped cross-section.

4. The method of manufacturing a mesh cable tray (1) according to any of claims 1 to 3, **characterized by** using, for molding said mesh cable tray (1), said injection mold (6) shaped such that said mesh cable tray (1) formed in said injection mold (6) has at the free ends of its side walls (3) an outward flange (12) formed by one of said longitudinal rods (5).

5. The method of manufacturing a mesh cable tray according to any of claims 1 to 4, **characterized by** molding said mesh cable tray (1) in said injection mold (6) in a polymeric material, constituting said molded mesh cable tray (1), from the group consisting of thermoplastics and thermosetting resins.

6. The method of manufacturing a mesh cable tray according to any of claims 1 to 5, **characterized in that** said polymeric material is an electrical insulating material with a surface resistivity greater than 100 MΩ.

## Patentansprüche

1. Verfahren zur Herstellung einer Kabel-Gitterrinne (1), die einen U-förmigen Querschnitt aufweist, mit einer unteren Wand (2) und zwei seitlichen Wänden (3), und die aus einer Vielzahl an querliegenden Stäbchen (4) und einer Vielzahl an längsliegenden Stäbchen (5) gebildet ist, wobei besagte querliegende Stäbchen (4) und längsliegende Stäbchen (5) sich überkreuzen, wobei diese ein Gitter bilden und miteinander verbunden werden, und wobei querliegende Stäbchen (4) und längsliegende Stäbchen (5) coplanar zueinander in deren Überkreuzung sind, **gekennzeichnet durch** das Formen besagter Kabel-Gitterrinne (1) als ein Einzelteil bestehend aus einem polymeren Material in einer Spritzgussform (6), wobei besagte Spritzgussform (6) dahingehend geformt ist, dass die in besagter Spritzgussform (6) abgeformten querliegenden Stäbchen (4) und längsliegenden Stäbchen (5) der Kabel-Gitterrinne (1) coplanar sind in deren Überkreuzung, und das die folgenden Schritte umfasst:
- Bildung eines ersten Segments (7) der besagten Kabel-Gitterrinne (1) in besagter Spritzgussform (6);
- Öffnen besagter Spritzgussform (6), Entformen des besagten ersten Segments (7), und Verschiebung des besagten ersten Segments (7) an eine neue Position in der Querrichtung der besagten Kabel-Gitterrinne (1), sodass in besagter neuer Position das besagte erste Segment (7) außerhalb der besagten Spritzgussform (6) angeordnet ist, außer einem Ende des besagten ersten Segments (7), das innerhalb des Hohlraums der besagten Spritzgussform (6) angeordnet ist; Schließen besagter Spritzgussform (6) und Abformen eines zweiten Segments (8) der besagten Kabel-Gitterrinne (1), welches integral ausgebildet ist, durch Abformen, mit besagtem ersten Segment (7) in dessen Verlängerung in besagte Längsrichtung;
- Optionale Wiederholung des vorhergehenden Schrittes zur Bildung nachfolgender Segmente (9) der besagten Kabel-Gitterrinne (1) bis zum Erhalt einer gewünschten Länge derselben.

2. Verfahren zur Herstellung einer Kabel-Gitterrinne (1) nach Anspruch 1, **gekennzeichnet durch** die Verwendung, zum Abformen besagter Kabel-Gitterrinne (1), besagte Spritzgussform (6) dahingehend geformt ist, dass die in besagter Spritzgussform (6) abgeformten querliegenden Stäbchen (4) und längsliegenden Stäbchen (5) der Kabel-Gitterrinne (1) einen rechteckförmigen Querschnitt aufweisen mit vier planaren Flächen (10) und Ecken ohne jedwede scharfe Kante (11).

3. Verfahren zur Herstellung einer Kabel-Gitterrinne (1) nach Anspruch 1 **gekennzeichnet durch** die Verwendung, zum Abformen besagter Kabel-Gitterrinne (1), besagte Spritzgussform (6), dahingehend geformt ist, dass die in der besagten Spritzgussform (6) abgeformten querliegenden Stäbchen (4) und längsliegenden Stäbchen (5) der Kabel-Gitterrinne (1) einen kreisförmigen Querschnitt aufweisen.

4. Verfahren zur Herstellung einer Kabel-Gitterrinne (1) nach einem der Ansprüche 1 bis 3, **gekennzeichnet durch** die Verwendung, zum Abformen besagter Kabel-Gitterrinne (1), besagte Spritzgussform (6), dahingehend geformt ist, dass besagte Kabel-Gitterrinne (1), abgeformt in besagter Spritzgussform (6), an den freien Enden der seitlichen Wände (3) einen abstehenden Flansch (12) aufweist gebildet durch einen der besagten längsliegenden Stäbchen (5).

5. Verfahren zur Herstellung einer Kabel-Gitterrinne (1) nach einem der Ansprüche 1 bis 4, **dadurch gekennzeichnet, dass** die besagte Kabel-Gitterrinne (1) in besagter Spritzgussform (6) abgeformt wird mit einem polymeren Material, bildend besagte abgeformte Kabel-Gitterrinne (1), aus der Gruppe bestehend aus Thermoplasten und duromeren Harzen.

6. Verfahren zur Herstellung einer Kabel-Gitterrinne (1) nach einem der Ansprüche 1 bis 5, **dadurch gekennzeichnet, dass** besagtes polymere Material ein elektrisch isolierendes Material ist mit einem Oberflächenwiderstand größer als 100 MΩ.

## Revendications

1. Procédé de fabrication d'un chemin de câbles en treillis (1) ayant un section transversale en forme de U, avec une paroi de fond (2) et deux parois latérales (3), et qui est composé d'une pluralité de tiges transversales (4) et d'une pluralité de tiges longitudinales (5), lesdites tiges transversales (4) et tiges longitudinales (5) se croisant les unes avec les autres en formant un treillis et étant jointes les unes aux autres, et lesdites tiges transversales (4) et tiges longitudinales (5) étant coplanaires dans leurs intersections les unes avec les autres, **caractérisé par** le moulage dudit chemin de câbles en treillis (1) en une seule pièce constituée d'un matériau polymère, dans un moule d'injection (6), ledit moule d'injection (6) étant mis en forme de sorte que les tiges transversales (4) et les tiges longitudinales (5) du chemin de câbles en treillis (1) formé dans ledit moule d'injection (6) soient coplanaires dans leurs intersections les unes avec les autres ; et en ce qu'il comprend les étapes suivantes :
- la formation dans ledit moule d'injection (6) d'un premier segment (7) dudit chemin de câbles en treillis (1) ;
- l'ouverture dudit moule d'injection (6), le démoulage dudit premier segment (7), et le déplacement dudit premier segment (7) jusqu'à une nouvelle position dans la direction longitudinale dudit chemin de câbles en treillis (1), de sorte que dans ladite nouvelle position ledit premier segment (7) soit agencé à l'extérieur dudit moule d'injection (6) à l'exception d'une extrémité dudit premier segment (7) qui est agencée à l'intérieur de la cavité dudit moule d'injection (6) ; la fermeture dudit moule d'injection (6) et le moulage d'un second segment (8) dudit chemin de câbles en treillis (1) qui est constitué d'un seul tenant, par moulage, avec ledit premier segment (7) dans son prolongement dans ladite direction longitudinale ;
- facultativement la répétition de l'étape précédente pour former des segments (9) successifs dudit chemin de câbles en treillis (1) jusqu'à obtention d'une longueur souhaitée de celui-ci.

2. Procédé de fabrication d'un chemin de câbles en treillis (1) selon la revendication 1, **caractérisé par** l'utilisation, pour le moulage dudit chemin de câbles en treillis (1), dudit moule d'injection (6) conformé de sorte que les tiges transversales (4) et les tiges longitudinales (5) du chemin de câbles en treillis (1) formé dans ledit moule d'injection (6) aient une section transversale de forme rectangulaire avec quatre faces planes (10) et des coins sans aucune arête vive (11).

3. Procédé de fabrication d'un chemin de câbles en treillis (1) selon la revendication 1, **caractérisé par** l'utilisation, pour le moulage dudit chemin de câbles en treillis (1), dudit moule d'injection (6) conformé de sorte que les tiges transversales (4) et les tiges longitudinales (5) du chemin de câbles en treillis (1) formé dans ledit moule d'injection (6) aient une section transversale de forme circulaire.

4. Procédé de fabrication d'un chemin de câbles en treillis (1) selon l'une quelconque des revendications 1 à 3, **caractérisé par** l'utilisation, pour le moulage dudit chemin de câbles en treillis (1), dudit moule d'injection (6) conformé de sorte que ledit chemin de câbles en treillis (1) formé dans ledit moule d'injection (6) ait au niveau des extrémités libres de ses parois latérales (3) un rebord vers l'extérieur (12) formé par l'une desdites tiges longitudinales (5).

5. Procédé de fabrication d'un chemin de câbles en treillis selon l'une quelconque des revendications 1 à 4, **caractérisé par** le moulage dudit chemin de câbles en treillis (1) dans ledit moule d'injection (6) dans un matériau polymère, constituant ledit chemin de câbles en treillis (1) moulé, du groupe consistant en des thermoplastiques et des résines thermodurcissables.

6. Procédé de fabrication d'un chemin de câbles en treillis selon l'une quelconque des revendications 1 à 5, **caractérisé en ce que** ledit matériau polymère est un matériau isolant électrique avec une résistivité de surface supérieure à 100 MΩ.
